(19) Europäisches Patentamt
European Patent Office
Office européen des brevets

(11) **EP 3 979 065 A1**

(12) **EUROPEAN PATENT APPLICATION**
published in accordance with Art. 153(4) EPC

(43) Date of publication:
**06.04.2022 Bulletin 2022/14**

(21) Application number: **20866475.5**

(22) Date of filing: **27.07.2020**

(51) International Patent Classification (IPC):
***G06F 3/14*** *(2006.01)*    ***H04N 21/472*** *(2011.01)*

(52) Cooperative Patent Classification (CPC):
**G06F 3/00; G06F 3/01; G06F 3/0487; G06F 3/14; G06F 21/44; G06F 21/84; G06T 7/70;** H04N 21/472

(86) International application number:
**PCT/CN2020/104918**

(87) International publication number:
**WO 2021/052008 (25.03.2021 Gazette 2021/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2019 CN 201910902574**

(71) Applicant: **Huawei Technologies Co., Ltd.**
**Shenzhen, Guangdong 518129 (CN)**

(72) Inventors:
• **MA, Rui**
**Shenzhen, Guangdong 518129 (CN)**

• **LIU, Gang**
**Shenzhen, Guangdong 518129 (CN)**
• **HUANG, Wei**
**Shenzhen, Guangdong 518129 (CN)**
• **YU, Hai**
**Shenzhen, Guangdong 518129 (CN)**
• **HUANG, Xiaolin**
**Shenzhen, Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **SCREEN PROJECTION METHOD AND SYSTEM**

(57)    This application relates to the field of artificial intelligence, and provides a projection method or system. The projection method includes: determining, based on image information obtained by a sensing apparatus, a display screen orientation of a handheld device; and displaying screen content of the handheld device on a target display screen when it is determined that the display screen orientation of the handheld device meets a preset orientation or notifying the handheld device to display screen content on a target display screen when it is determined that the display screen orientation of the handheld device meets a preset orientation. This solution may be applied to a projection operation of a smart device such as a handheld device in an in-vehicle environment in smart driving or an autonomous driving field, or may be applied to a projection operation in a home or office scenario. Whether to perform projection is determined by detecting user behavior and/or a status of a smart device such as a handheld terminal. This implements a more convenient and efficient projection operation.

FIG. 1

## Description

### TECHNICAL FIELD

This application relates to the field of user behavior identification technologies, and in particular, to a more efficient and quick projection method and system that is implemented by analyzing user behavior.

### BACKGROUND

It is well known that an application of a handheld smart terminal projection technology has been very common. The handheld smart terminal projection technology is mainly applied to a video play device such as a television that can display screen-related information of a handheld smart terminal device through a specific operation, and current screen display content of the handheld smart terminal or a menu interface of the terminal is usually displayed.

In recent years, with development of autonomous driving technologies, technology research related to an in-vehicle smart cockpit is developed to provide, by using an in-vehicle smart environment, more intelligent services for a user during driving. How to better project screen display of a handheld device to an in-vehicle display apparatus is also one of important requirements of the user during riding or driving a vehicle.

An existing in-vehicle handheld terminal projection technology mainly includes two modes: a plug-in mode and a wireless mode. Although an existing in-vehicle projection solution greatly enriches user experience in in-vehicle entertainment and communications fields, for a specific startup means of handheld terminal projection, the two startup modes each have problems that an operation is complex and projection content is not synchronized in real time.

In the plug-in in-vehicle projection startup mode, the user searches for a corresponding projection button after plugging-in and taps the button, and starts projection based on the tapping operation of the user. A main disadvantage is that a handheld terminal connects to in-vehicle infotainment in the plug-in mode, and the user needs to carry a USB cable, which is inconvenient to use. Generally, in the wireless in-vehicle projection startup mode, after a handheld terminal connects to in-vehicle infotainment through Bluetooth, the user searches for a corresponding projection button and taps the button, and starts projection based on the tapping operation of the user. In this solution, although the handheld terminal connects to the in-vehicle infotainment in a wireless manner, the user still needs to search for a corresponding startup button on a central control screen, the steps are complex due to a deep interface hierarchy..

How to more conveniently implement a projection operation of the handheld device, accurately determine a projection intention of the user when the user needs to perform projection, reduce a possibility of misoperation and misidentification while operation convenience is improved, and improve projection experience of the user is a focus in this solution.

### SUMMARY

Embodiments of this application provide a projection method and system, which can be applied to a plurality of application scenarios such as smart driving, smart home, a smart television, and a smart large screen. A user behavior intention and a current status of a handheld terminal are analyzed, to implement an accurate and convenient projection operation. In this way, when a user wants to perform projection, the user no longer needs to perform a complex tap operation. In addition, because a user intention can be considered by comprehensively analyzing user behavior, a possibility of misoperation is avoided being increased because of operation simplification, to ensure accuracy of determining the user intention.

According to a first aspect, an embodiment of the present invention provides a projection method. The method includes: determining, based on image information obtained by a sensing apparatus, a display screen orientation of a first device; and displaying screen content of the first device on a target display screen when it is determined that the display screen orientation of the first device meets a preset orientation or notifying the first device to display screen content on a target display screen when it is determined that the display screen orientation of the first device meets a preset orientation.

Whether to perform projection is determined by determining the screen orientation of the first device. This simplifies a projection operation of a user.

In specific implementation, the notifying the first device to display screen content on a target display screen when it is determined that the display screen orientation of the first device meets a preset orientation may be: sending a message to the first device to notify the first device to display the screen content on the target display screen when it is determined that the display screen orientation of the first device faces the target display screen.

That the display screen faces the target display screen is used as a trigger condition for determining whether to perform projection. This can effectively avoid a misoperation while a projection operation is simplified. This is because a display screen of a handheld device usually faces the user in a normal use state.

In specific implementation, the displaying screen content of the first device on a target display screen when it is determined that the display screen orientation of the first device meets a preset orientation may be: displaying the screen content of the first device on the target display screen when it is determined that the display screen orientation of the first device faces the target display screen and that authorization information of the first device is obtained.

Whether the device is authorized is determined, and when the device is authorized, the projection operation is performed. It can be ensured that the user allows the projection operation while the projection operation is simplified, to avoid performing the projection operation without permission. For example, another user can be effectively prevented from using a handheld device of the user to project screen content on the handheld device without permission.

The projection method in the first aspect may further include: determining, based on video or multi-frame image information obtained by a sensing apparatus, that there is an action of a hand approaching the target display screen; and sending a message to the first device to notify the first device to display the screen content on the target display screen when it is determined that there is the action of the hand approaching the target display screen and that the display screen orientation of the first device faces the target display screen.

The projection method in the first aspect may further include: determining, based on information that is obtained by a sensing apparatus and that is about a distance from a hand to the sensing apparatus, that a distance from the hand to the target display screen is less than a preset value; and sending a message to the first device to notify the first device to display the screen content on the target display screen when it is determined that the distance from the hand to the target display screen is less than the preset value and that the display screen orientation of the first device faces the target display screen.

The projection method in the first aspect may further include: determining, based on the image information obtained by a sensing apparatus, that the first device is held; and sending a message to the first device to notify the first device to display the screen content on the target display screen when it is determined that the first device is held and that the display screen orientation of the first device faces the target display screen.

The projection method in the first aspect may further include: determining, based on video or multi-frame image information obtained by a sensing apparatus, that there is an action of a hand approaching the target display screen; determining, based on image information obtained by a sensing apparatus, that the first device is held; and sending a message to the first device to notify the first device to display the screen content on the target display screen when it is determined that there is the action of the hand approaching the target display screen, that the first device is held, and that the display screen orientation of the first device faces the target display screen.

A sequence of the foregoing determining actions is not limited.

The projection method in the first aspect may further include: determining, based on information that is obtained by a sensing apparatus and that is about a distance from a hand to the sensing apparatus, that a distance from the hand to the target display screen is less than a preset value; determining, based on image information obtained by a sensing apparatus, that the first device is held; and sending a message to the first device to notify the first device to display the screen content on the target display screen when it is determined that the distance from the hand to the target display screen is less than the preset value, that the first device is held, and that the display screen orientation of the first device faces the target display screen.

Another determining condition is added to jointly determine a projection intention of the user. This can further reduce a risk of misoperation. In addition, hand approaching and determining whether the device is held are also simple and easy actions that can be performed by the user during projection.

The determining, based on the image information obtained by the sensing apparatus, that the first device is held includes: determining, according to intersection over union between the hand and the first device in the image information obtained by the sensing apparatus, that the first device is held.

Whether the handheld device is held is determined by using the intersection over union, so that whether the user holds the handheld device can be effectively identified.

The projection method in the first aspect may further include: determining a posture of the first device based on image information obtained by a sensing apparatus; and determining a projection display mode of the target display screen based on the posture of the first device.

A projection mode is determined by adding posture determining, so that a projection function is more abundant while the projection operation is simplified. This meets diversified user requirements.

In specific implementation of the projection method in the first aspect, one neural network may be trained to output two determining result conclusions. In other words, in the projection method in the first aspect, in specific implementation, that it is determined that the first device is held, and that the display screen orientation of the first device faces the target display screen may be: determining, based on the image information obtained by the sensing apparatus and based on a same neural network model, whether the user holds the first device and the display screen orientation of the first device.

According to a second aspect, an embodiment of the present invention further discloses a projection system. The system includes a target display screen and at least one processor, where the at least one processor determines, based on image information obtained by a sensing apparatus, a display screen orientation of a first device; and the at least one processor displays screen content of the first device on the target display screen when the at least one processor determines that the display screen orientation of the first device meets a preset orientation or notifies the first device to display screen content on the target display screen when the at least one processor determines that the display screen orientation of the first device meets a preset orientation.

In specific implementation, the at least one processor sends a message to the first device to notify the first device to display screen content on the target display screen when the at least one processor determines that the display screen orientation of the first device meets a preset orientation. Specifically, the at least one processor sends a message to the first device to notify the first device to display the screen content on the target display screen when the at least one processor determines that the display screen orientation of the first device faces the target display screen.

In specific implementation, that the at least one processor displays screen content of the first device on the target display screen when the at least one processor determines that the display screen orientation of the first device meets a preset orientation may be: the at least one processor displays the screen content of the first device on the target display screen when it is determined that the display screen orientation of the first device faces the target display screen and that authorization information of the first device is obtained.

The at least one processor may further determine, based on video or multi-frame image information obtained by a sensing apparatus, that there is an action of a hand approaching the target display screen.

The at least one processor sends a message to the first device to notify the first device to display the screen content on the target display screen when the at least one processor determines that there is the action of the hand approaching the target display screen and that the display screen orientation of the first device faces the target display screen.

The at least one processor may further determine, based on information that is obtained by a sensing apparatus and that is about a distance from a hand to the sensing apparatus, that a distance from the hand to the target display screen is less than a preset value. The at least one processor sends a message to the first device to notify the first device to display the screen content on the target display screen when the at least one processor determines that the distance from the hand to the target display screen is less than the preset value and that the display screen orientation of the first device faces the target display screen.

The at least one processor may further determine, based on image information obtained by a sensing apparatus, that the first device is held. The at least one processor sends a message to the first device to notify the first device to display the screen content on the target display screen when the at least one processor further determines that the first device is held and that the display screen orientation of the first device faces the target display screen.

The at least one processor may further determine, based on video or multi-frame image information obtained by a sensing apparatus, that there is an action of a hand approaching the target display screen. The at least one processor determines, based on image information obtained by a sensing apparatus, that the first device is held. The at least one processor sends a message to the first device to notify the first device to display the screen content on the target display screen when the at least one processor determines that there is the action of the hand approaching the target display screen, that the first device is held, and that the display screen orientation of the first device faces the target display screen.

The at least one processor may further determine, based on information that is obtained by a sensing apparatus and that is about a distance from a hand to the sensing apparatus, that a distance from the hand to the target display screen is less than a preset value. The at least one processor determines, based on image information obtained by a sensing apparatus, that the first device is held. The at least one processor sends a message to the first device to notify the first device to display the screen content on the target display screen when the at least one processor determines that the distance from the hand to the target display screen is less than the preset value, that the first device is held, and that the display screen orientation of the first device faces the target display screen.

In specific implementation, that the at least one processor determines, based on the image information obtained by the sensing apparatus, that the first device is held may be: The at least one processor determines, according to intersection over union between the hand and the first device in the image information obtained by the sensing apparatus, that the first device is held.

The projection system in the second aspect may include: The at least one processor further determines a posture of the first device based on image information obtained by a sensing apparatus; and the at least one processor determines a projection display mode of the target display screen based on the posture of the first device.

That the at least one processor determines that the first device is held, and that the display screen orientation of the first device faces the target display screen may be specifically: The at least one processor determines, based on the image information obtained by the sensing apparatus and based on a neural network model, whether the user holds the first device and the display screen orientation of the first device.

According to a third aspect, an embodiment of the present invention further discloses a projection system. The system includes an image collection unit, a display unit, and a determining unit. The image collection unit is configured to obtain image information and send the image information to the determining unit. The determining unit is configured to: determine a display screen orientation of a first device based on the image information obtained by the image collection unit, and when the determining unit determines that the display screen orientation of the first device meets a preset orientation, indicate to perform projection. The display unit displays screen content of the first device.

In specific implementation, that the determining unit indicates to perform projection may be: notifying the first device, so that the first device sends the screen content to a target display screen.

In specific implementation, the determining unit sends a message to the first device to notify the first device to display screen content on a target display screen when the determining unit determines that the display screen orientation of the first device meets a preset orientation. Specifically, the determining unit sends a message to the first device to notify the first device to display the screen content on the target display screen when the determining unit determines that the display screen orientation of the first device faces the target display screen.

In specific implementation, that the display unit displays screen content of the first device on a target display screen when the determining unit determines that the display screen orientation of the first device meets a preset orientation. Specifically, the display unit displays the screen content of the first device on the target display screen when the determining unit determines that the display screen orientation of the first device faces the target display screen and that authorization information of the first device is obtained.

The determining unit may further determine, based on video or multi-frame image information obtained by the image collection unit, that there is an action of a hand approaching the target display screen. The determining unit sends a message to the first device to notify the first device to display the screen content on the target display screen when the determining unit determines that there is the action of the hand approaching the target display screen and that the display screen orientation of the first device faces the target display screen.

The projection system may further include a distance obtaining unit, and the determining unit may further determine, based on information that is obtained by the distance obtaining unit and that is about a distance from a hand to the sensing apparatus, that a distance from the hand to the target display screen is less than a preset value. The determining unit sends a message to the first device to notify the first device to display the screen content on the target display screen when the determining unit determines that the distance from the hand to the target display screen is less than the preset value and that the display screen orientation of the first device faces the target display screen.

The determining unit may further determine, based on image information obtained by the image collection unit, that the first device is held. The determining unit sends a message to the first device to notify the first device to display the screen content on the target display screen when the determining unit determines that the first device is held and that the display screen orientation of the first device faces the target display screen.

The determining unit may further determine, based on video or multi-frame image information obtained by the image collection unit, that there is an action of a hand approaching the target display screen. The determining unit determines, based on image information obtained by a sensing apparatus, that the first device is held. The determining unit sends a message to the first device to notify the first device to display the screen content on the target display screen when the determining unit determines that there is the action of the hand approaching the target display screen, that the first device is held, and that the display screen orientation of the first device faces the target display screen.

The determining unit may further determine, based on information that is obtained by the image collection unit and that is about a distance from a hand to the sensing apparatus, that a distance from the hand to the target display screen is less than a preset value. The determining unit determines, based on the image information obtained by the sensing apparatus, that the first device is held. The determining unit sends a message to the first device to notify the first device to display the screen content on the target display screen when the determining unit determines that the distance from the hand to the target display screen is less than the preset value, that the first device is held, and that the display screen orientation of the first device faces the target display screen.

In specific implementation, that the determining unit determines, based on the image information obtained by the image collection unit, that the first device is held may be: The determining unit determines, according to intersection over union between the hand and the first device in the image information obtained by the sensing apparatus, that the first device is held.

The projection system in the second aspect may further include: The determining unit further determines a posture of the first device based on the image information obtained by the image collection unit; and the determining unit determines a projection display mode of the target display screen based on the posture of the first device.

That the determining unit determines that the first device is held, and that the display screen orientation of the first device faces the target display screen may be specifically: The determining unit determines, based on the image information obtained by the sensing apparatus and based on a neural network model, whether the user holds the first device and the display screen orientation of the first device.

The image information collected by the image collection unit in the foregoing different conditions may be the same or may be different.

The image collection unit may include a plurality of collection subunits, and different image information may be from a same image collection subunit or different image collection subunits.

According to a fourth aspect, an embodiment of this application provides a projection method. The method includes: determining, based on information obtained by a sensing apparatus, whether there is an action of a hand approaching a target display screen; determining, based on image information obtained by a sensing apparatus, whether a to-be-projected device is held when it is determined that there is the action of the hand approaching the target display screen; determining, based on image information obtained by a sensing apparatus, a display screen orientation of the to-be-projected device when it is determined that the to-be-projected device is held; and displaying screen content of the to-be-projected device on the target display screen when the display screen orientation of the to-be-projected device meets a preset orientation or notifying the first device to display screen content on the target display screen when the display screen orientation of the to-be-projected device meets a preset orientation.

In the foregoing method, a user action, whether the to-be-projected device is held, and the orientation of the to-be-projected device are determined based on user behavior information. Then, a user intention is comprehensively determined, and then a projection operation is performed. A projection step is simplified, so that a user can perform projection by using one hand. In addition, comprehensive analysis such as behavior detection and image identification is performed to ensure accuracy of projection intention identification.

Optionally, in the fourth aspect, whether there is the action of the hand approaching the target display screen is determined based on information obtained by a sensing apparatus. The information obtained by the sensing apparatus may be image information or distance information.

Correspondingly, the foregoing sensing apparatus may be a camera, or may be a depth camera or a radar.

In the fourth aspect, whether there is the action of the hand approaching the target display screen is determined by using a neural network model, for example, a 3D convolutional neural network model, to identify user behavior, so as to identify a behavior trend of the user.

An input of the behavior identification model in the fourth aspect is a video or an image of a plurality of frames that are in time sequence, and an output result is a probability of identifying that the action of the hand of the user approaches the target display screen, or an output result is a conclusion of identifying whether the action of the hand of the user approaches the target display screen.

In the foregoing method, the user behavior can be accurately identified by using the neural network model, to ensure accuracy of a behavior analysis conclusion of a final user intention.

Further, the projection method in the fourth aspect may further determine a posture of the first device based on image information obtained by a sensing apparatus; and determine a projection display mode of the target display screen based on the posture of the first device.

A projection mode desired by the user is identified by determining the posture. In the foregoing manner, the user does not need to manually select or set a projection display mode.

According to a fifth aspect, an embodiment of this application provides a projection system, including at least one processor. The at least one processor determines, based on information obtained by a sensing apparatus, whether there is an action of a hand approaching a target display screen; determines, based on image information obtained by a sensing apparatus, whether a to-be-projected device is held when it is determined that there is the action of the hand approaching the target display screen; determines, based on image information obtained by a sensing apparatus, a display screen orientation of the to-be-projected device when it is determined that the to-be-projected device is held; and displays screen content of the to-be-projected device on the target display screen when the display screen orientation of the to-be-projected device meets a preset orientation or notifies the first device to display screen content on the target display screen when the display screen orientation of the to-be-projected device meets a preset orientation.

According to a sixth aspect, an embodiment of this application provides a projection system, including at least one determining unit and one display unit. The at least one determining unit determines, based on information obtained by a sensing apparatus, whether there is an action of a hand approaching a target display screen; determines, based on image information obtained by a sensing apparatus, whether a to-be-projected device is held when it is determined that there is the action of the hand approaching the target display screen; determines, based on image information obtained by a sensing apparatus when it is determined that the to-be-projected device is held, a display screen orientation of the to-be-projected device; and displays screen content of the to-be-projected device on the target display screen when the display screen orientation of the to-be-projected device meets a preset orientation or notifies the first device to display screen content on the target display screen when the display screen orientation of the to-be-projected device meets a preset orientation.

According to a seventh aspect, an embodiment of this application further provides a computer program product. The computer program product may be configured to perform the methods in the first aspect and the fourth aspect in the embodiments of the present invention.

According to an eighth aspect, an embodiment of this application further provides a computer-readable storage medium. The computer-readable storage medium stores computer instructions, and performs the methods in the first aspect and the fourth aspect in the embodiments of the present invention by running the computer instructions.

It can be learned that, by implementing the technical solutions in the embodiments of this application, a disadvantage of complexity and inconvenience of a current projection operation can be avoided. An existing in-vehicle environment and a sensing apparatus on a display device of a smart television can be fully used. User behavior information is obtained and smart user behavior analysis is performed to determine whether a user needs to initiate a projection operation, so as to determine whether to perform projection. This implements an accurate and convenient projection operation, and effectively avoids a possibility of increasing a misoperation while an operation is simplified. In addition, projection logic that adapts to various landscape and portrait screens is proposed, and a landscape projection or a portrait projection is accurately determined by identifying a status of a handheld terminal. The projection solution in the present invention not only implements quick projection on an in-vehicle display screen, but also can be extended to another smart electronic device with a sensing apparatus such as a camera, for example, a television, a notebook computer, a tablet computer, or a display.

## BRIEF DESCRIPTION OF DRAWINGS

To describe the technical solutions in the embodiments of this application or in the background more clearly, the following briefly describes the accompanying drawings for describing the embodiments of this application or the background.

FIG. 1 shows an example application scenario according to an embodiment of the present invention;
FIG. 2 shows another application scenario according to an embodiment of the present invention;
FIG. 3 shows an implementation of a projection method according to an embodiment of the present invention;
FIG. 4 shows an example deployment diagram of a sensing apparatus according to an embodiment of the present invention;
FIG. 5 shows an implementation of 3DCNN-based hand behavior identification according to an embodiment of the present invention;
FIG. 6 shows an implementation of 2DCNN-based hand behavior identification according to an embodiment of the present invention;
FIG. 7 shows an implementation of hand behavior identification according to an embodiment of this application;
FIG. 8 shows an implementation of hand behavior identification according to an embodiment of this application;
FIG. 9 shows an implementation of a screen orientation of a handheld device according to an embodiment of this application;
FIG. 10 shows an implementation of posture identification of a handheld device according to an embodiment of this application;
FIG. 11 shows an implementation of a projection method according to an embodiment of the present invention;
FIG. 12 shows an implementation of a projection method according to an embodiment of the present invention;
FIG. 13 is a schematic structural diagram of a projection system according to an embodiment of the present invention;
FIG. 14 is a schematic structural diagram of a projection system according to an embodiment of the present invention; and
FIG. 15 shows an implementation of hand behavior identification and screen orientation identification according to an embodiment of the present invention.

## DESCRIPTION OF EMBODIMENTS

The following describes specific implementations of this application by using accompanying drawings in the embodiments of this application as examples. However, implementations of this application may further include combining these embodiments, for example, using other embodiments and making structural changes, without departing from the spirit or scope of this application. Therefore, the detailed description of the following embodiments should not be understood in a limiting sense. Terms used in the embodiments of this application are only used to explain the specific embodiments of this application, and are not intended to limit this application.

One or more structures of functions, modules, features, units, and the like mentioned in the specific embodiments of this application may be understood as being implemented in any manner by any physical or tangible component (for example, software or hardware running on a computer device (for example, a logical function implemented by a processor or a chip), and/or any combination thereof). In some embodiments, division of various devices into different modules or units shown in the accompanying drawings may reflect use of corresponding different physical and tangible components in actual implementation. Optionally, a single module in the accompanying drawings of the embodiments of this application may be alternatively implemented by a plurality of actual physical components. Similarly, any two or more modules depicted in the accompanying drawings may also reflect different functions performed by a single actual physical component.

In a method flowchart of the embodiments of this application, some operations are described as different steps performed in a specific sequence. Such a flowchart is illustrative and not restrictive. Some steps described in this specification may be grouped together and performed in a single operation, some steps may be split into a plurality of sub-steps, and some steps may be performed in a sequence different from that shown in this specification. The steps shown in the flowchart may be implemented in any manner by any circuit structure and/or physical mechanism (for example, software or hardware running on a computer device (for example, a logical function implemented by a processor or a chip), and/or any combination thereof).

In the following description, one or more features may be marked as "optional". This type of declaration should not be explained as an exhaustive indication of features that may be considered as optional. In other words, although not explicitly identified in this specification, another feature may be considered as optional. In addition, any description of a single entity is not intended to exclude use of a plurality of such entities. Similarly, descriptions of the plurality of entities are not intended to exclude use of the single entity. Finally, the term "for example" refers to one of many potential implementations.

Embodiments of this application mainly describe a projection method. A current status of a handheld terminal and/or a user behavior intention are/is analyzed to determine whether a user has a motivation to initiate projection. Whether to perform a projection operation is determined based on the user projection motivation, to implement an accurate and convenient projection operation. Therefore, when the user wants to perform projection, the user does not need to perform complex operations such as tapping, selection, and interface switching.

The solutions of the present invention not only can implement quick and accurate projection of an in-vehicle central control screen, but also can extend to another smart electronic device with a sensing apparatus such as a camera, for example, a television, a notebook computer, a tablet computer, or a display.

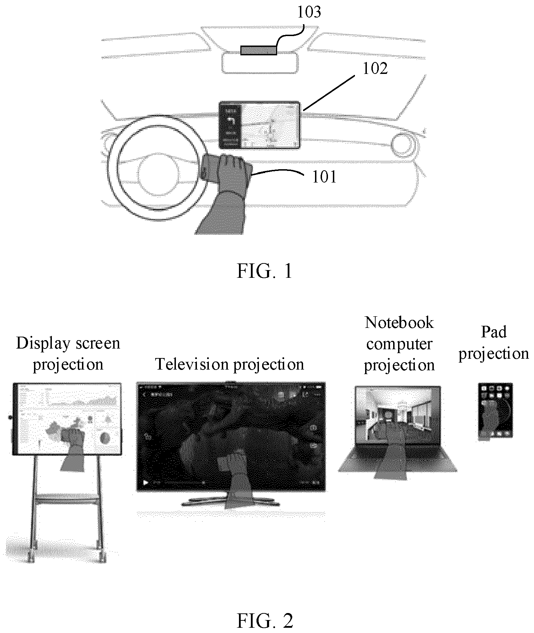

FIG. 1 shows an example application scenario according to an embodiment of the present invention: an in-vehicle projection scenario. An in-vehicle processor apparatus (not shown in FIG. 1) identifies a status of a user handheld device 101 and/or user behavior based on status information of the current user handheld device and/or user hand behavior information that are/is obtained by a sensing apparatus 103, where the sensing apparatus is a built-in sensing apparatus device in a vehicle or an external sensor device, to determine whether a user intends to perform a projection operation.

The sensing apparatus 103 obtains the status information of the user handheld device and/or the user hand behavior information. An in-vehicle control system in a vehicle such as a processor apparatus determines a user intention based on the status information of the user handheld device and/or the user hand behavior information that are/is obtained by the sensing apparatus 103, for example, determining, based on one or more types of identified information, such as whether a hand is approaching an in-vehicle display screen 102, the status of the handheld device 101 identified in the behavior information, whether the user holds the handheld device 101, whether a screen orientation of the handheld device 101 faces the in-vehicle display screen 102, whether to perform a projection operation on screen content of the user handheld device on the in-vehicle display apparatus 102 in the vehicle for display.

In a more specific scenario, during using a vehicle, the user uses the handheld device to search for a destination and start navigation, but it is inconvenient to view navigation information on a screen of the handheld device, or the user expects to view a video or an image on the handheld device through the in-vehicle display screen, or the user expects to project an APP of the handheld device 101 on the in-vehicle display apparatus 102 for operation. In this case, the user may perform a projection operation based on one or more agreed conditions, and the condition may be the status information of the user handheld device and/or the user hand behavior information that are/is used to trigger a system to identify that the user has a projection intention. For example, the user may identify, based on image information obtained by a sensing apparatus, that the status of the handheld device 101 is facing the in-vehicle display apparatus 102, to determine that the user has the projection intention at this moment. Then, the system triggers the projection operation.

In some application scenarios, to avoid a possibility of increasing a misoperation while an operation is simplified, and ensure accuracy of determining the user intention, comprehensive analysis may be further performed on the user behavior to consider the user intention. In this case, the condition may be a combination of a plurality of conditions. For example, when the agreed conditions are: identifying that the user hand approaches the in-vehicle display apparatus 102, that the user holds the handheld device 101, and that the status of the handheld device 101 is facing the in-vehicle display apparatus 102. When all the three conditions are met, it is identified through analysis that the user intention is to start projection, so that a projection instruction is sent to trigger projection. A current destination navigation interface on the display screen of the handheld device is projected, in a landscape mode or a portrait mode, on the in-vehicle display screen according to an action instruction of the user, to continue to navigate or play a video. Any two of the three conditions may alternatively be met in implementation to start projection.

In some application scenarios, to avoid continuous detection on the user intention based on the plurality of conditions and reduce a computation amount of the system, when a solution of comprehensive determining of the plurality of conditions is implemented, it may be selected that the plurality of conditions are in a successive triggering relationship. Once one of the plurality of conditions is not met, the first condition is returned for detection and determining from the beginning. When all of the plurality of conditions are successively met, the projection operation is performed. For example, the three conditions are in a sequence of identifying that the user hand approaches the in-vehicle display apparatus 102, that the user holds the handheld device 101, and that the status of the handheld device 101 is facing the in-vehicle display apparatus 102. Specifically, whether the user hand approaches the in-vehicle display apparatus 102 is determined. If a determining result is no, whether the user hand approaches the in-vehicle display apparatus 102 is continued to be determined. If a determining result is yes, whether the user holds the handheld device 101 is further identified. Similarly, if a determining result is no, the first step is returned to be performed to determine whether the user hand approaches the in-vehicle display apparatus 102. If a determining result is yes, whether the status of the handheld device 101 is facing the in-vehicle display apparatus 102 is continued to be determined. If a determining result is no, the first step is returned to be performed to determine whether the user hand approaches the in-vehicle display apparatus 102. If a determining result is yes, projection is determined to be triggered. An arrangement sequence of the foregoing sequence trigger conditions is merely an example, and may alternatively be another arrangement sequence. Likewise, the determining conditions may alternatively be any two of the sequence trigger conditions.

Further, in the foregoing scenario, because the user may need a plurality of screen display modes, whether the screen content of the current handheld device 101 is displayed in the landscape mode or the portrait mode may be further determined by determining whether a posture of the handheld device 101 is horizontal or vertical. Therefore, the posture is determined at any time before the projection operation is implemented.

In addition to the foregoing in-vehicle projection scenario, the projection solution in the present invention is further applicable to various display devices with a built-in sensing apparatuses or various display devices that can be connected to sensing apparatuses. An application scenario of another type of display device is shown in FIG. 2, and may be applied to a projection operation in a home or office scenario. A device to which the projection solution in the present invention is applicable may further include a display, a television, a notebook computer, or a PAD (pad) that is configured with a camera and on which the projection operation can be performed. Specific implementation details of the foregoing solution are described in detail in the following embodiments.

The handheld device mentioned in the present invention may be a portable smart device, for example, a handheld terminal, a pad, or a wearable device. In subsequent examples, only the handheld terminal is used as an example, but it may be understood that the handheld device may be replaced with any other portable smart device. The in-vehicle sensing apparatus may be a sensing apparatus such as a camera or a radar, and is configured to sense user behavior information or user distance information. The camera mentioned in the present invention refers to any sensing apparatus that can obtain user image information. The image information may be video information or picture information, and the camera may be a conventional camera, a monocular camera, a binocular camera, a fisheye camera, or a depth camera. The radar mentioned in the present invention is an electronic device that detects a target by using an electromagnetic wave, and may specifically include a laser rangefinder, an infrared rangefinder, and an ultrasonic rangefinder. The user behavior information may be image information obtained by the camera, and/or distance information, of a specific target part of a user, obtained by the radar. The video information mentioned in the present invention may also refer to image information of a plurality of frames that are consecutive in time. The in-vehicle sensing apparatus 103 shown in FIG. 1 may be one or more of sensing apparatuses of a same type, or may be a combination of different quantities of sensing apparatus of different types. The in-vehicle display screen mentioned in the present invention may be any display screen that is disposed in the vehicle and that can be used for display. The central control screen mentioned in this specification is merely a specific example of the in-vehicle display screen, and is not specially limited.

The user behavior and the status of the handheld device are obtained by using the camera. Behavior identification and image identification may be performed by using a deep learning method, for example, by using a convolutional neural network model, a deep neural network model, or any other model that can be used for behavior identification or image identification. Based on the obtained user behavior, whether there is an action and a status that can indicate that the user wants to perform projection is analyzed. For example, whether the user performs the projection operation is determined by determining whether the user hand approaches the in-vehicle display screen, whether there is the handheld device in the image or whether the user holds the handheld device, and whether a display screen orientation of the handheld device faces the in-vehicle display screen, to determine to perform the projection operation. Alternatively, another preset action may be used, and if it is identified that the user performs the preset action, the projection operation is started.

When the specific implementations are described in the embodiments of the present invention, for ease of understanding, a specific apparatus name or technical means is used to describe the solution. However, the specific apparatus and technical means mentioned are not intended to limit the described implementations. It may be understood that the solution may still be implemented by using another apparatus or means that has a function similar to that of the apparatus or means.

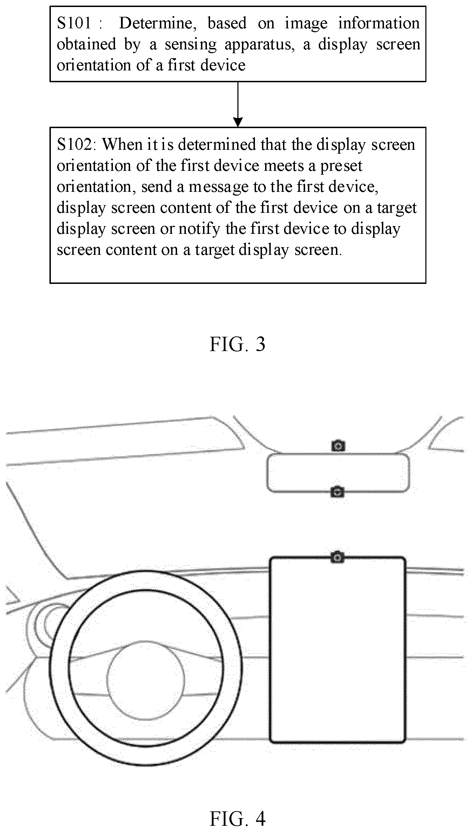

FIG. 3 is a specific implementation of a projection method according to the present invention. Specific implementations of the present invention describe an application scenario in which a vehicle is used as an example, but the vehicle is not used as a limitation on an applicable scenario of the solution. A technical solution of the present invention is also applicable to a case in which an in-vehicle display screen is replaced with a display device such as a smart television, and an in-vehicle camera is replaced with a built-in camera or an external camera of the smart television.

S101: Determine, based on image information obtained by a sensing apparatus, a display screen orientation of a first device.

The sensing apparatus may be an in-vehicle camera or an external camera. The image information is a view, in a vehicle, that is of a current user and that is obtained by the sensing apparatus, and may be a video or a picture. The first device may be a handheld device, and there may be a plurality of implementations for determining a handheld device orientation based on the view, in the vehicle, of the current user, including an implementation for determining the handheld device orientation based on a deep neural network.

The handheld device orientation detection network detects a handheld device image set $X = \{x_0, x_1, x_2, ..., x_n\}$. A corresponding label $\{0\}$ or $\{1\}$ respectively represents that the handheld device faces forward or that the handheld device faces backward, to train a binary classification network. The binary classification network is used to obtain orientation information of the handheld device based on input image information.

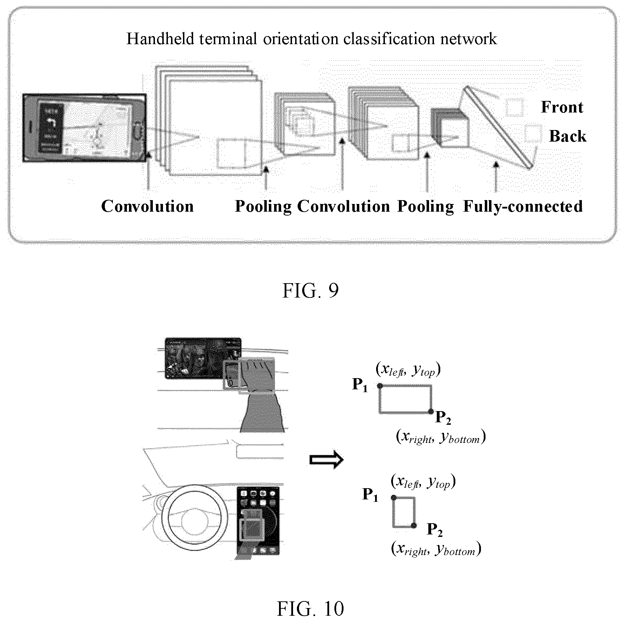

Orientation classification of the handheld device is implemented based on the deep neural network. A principle diagram of the classification is shown in FIG. 9. An input of the handheld device orientation detection network is third user behavior information. Two categories that are front (Front) and back (Back) of the handheld device need to be predicted. A specific principle of predicting front and back based on a deep neural network model is as follows: A convolution operation is continuously applied to an input image, so that a size of a characteristic degree is continuously reduced, a characteristic vector representing the handheld device orientation is obtained, and finally a prediction value of the handheld device orientation is directly output by connecting to a fully connected layer.

S102: When it is determined that the display screen orientation of the first device meets a preset orientation, send a message to the first device, display screen content of the first device on a target display screen or notify the first device to display screen content on a target display screen.

The preset orientation may be that a display screen of the handheld device faces the target display screen, or may be that a display screen faces another orientation. When an analysis detection result is that the foregoing condition is met, a projection operation is determined to be initiated.

The target display screen herein is a display screen configured to display screen content of the handheld device, and may be a central control screen, or may be another in-vehicle display screen, or may be any other display screen on which projection content is displayed in a non-vehicle environment.

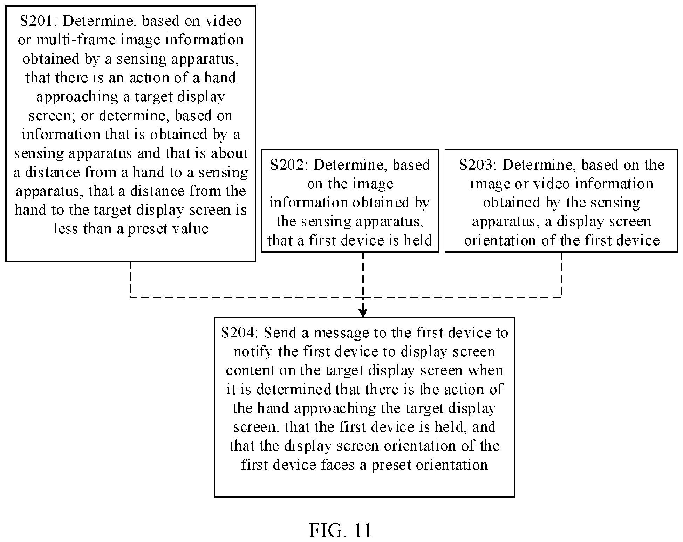

FIG. 11 is another embodiment of a projection method according to the present invention.

S201: Determine, based on video or multi-frame image information obtained by a sensing apparatus, that there is an action of a hand approaching a target display screen; or determine, based on information that is obtained by a sensing apparatus and that is about a distance from a hand to the sensing apparatus, that a distance from the hand to the target display screen is less than a preset value.

User behavior information is obtained by using a camera, a radar, and the like. The user behavior information may be image information (the image information may be a video or a picture) or distance information, and user behavior is detected based on the obtained behavior information to determine whether there is a preset action. The preset action may be an agreed special action, or may be an action that is preset by a system and that represents that a user specifically has a projection intention. Alternatively, when it is determined that an obstruction approaches the target display screen, in the present invention, for example, it is considered that the action of hand approaching the target display screen (the target display screen may be an in-vehicle central control screen or another in-vehicle display apparatus, or another display apparatus) is one of actions of the user having the projection intention.

For example, the sensing apparatus is a camera, user behavior data is image data, which may be specifically video information or picture information of a plurality of frames that has a time relationship, and when it is identified, based on the image data, that the user behavior is hand gradually approaching the target display screen, it is considered that the user has an intention of performing a projection operation (in other words, the preset action is user hand gradually approaching the central control screen). A more specific implementation may be: When an in-vehicle camera and a processor are in an enabled state, the in-vehicle camera continuously capture image data of the user, and transmits the image data to a processor unit. After receiving the image data, the processor unit performs a behavior detection operation to determine whether there is an action of the user hand approaching an in-vehicle display screen. There are usually two common manners to implement this function, and the two common manners are described respectively.

• 3DCNN-based behavior identification network

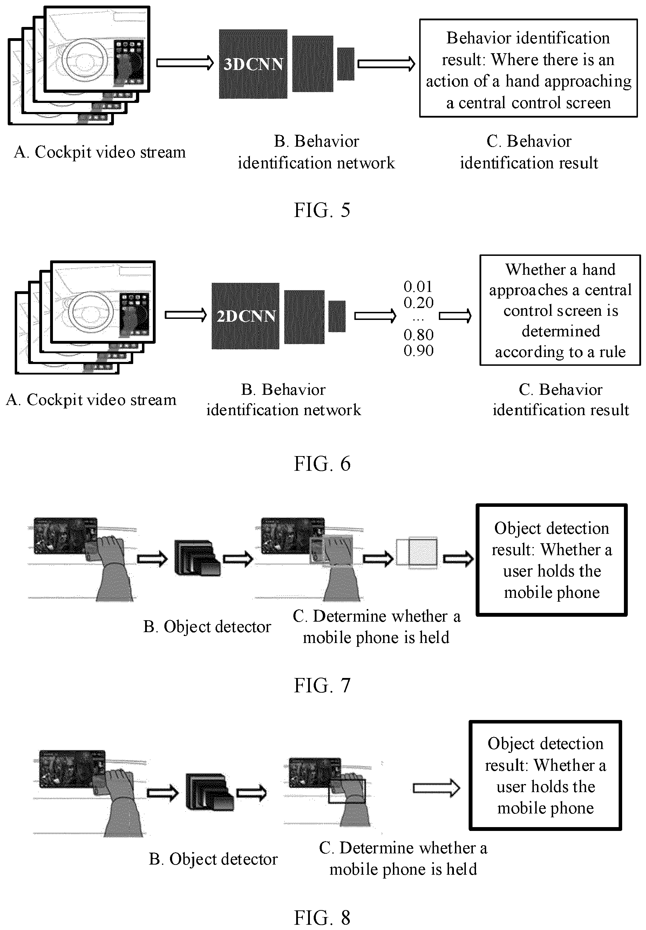

Because behavior identification involves in a series of time-related actions, a 3DCNN may be used to directly use time information as an input of one dimension, to determine whether there is the action of the hand approaching the central control screen. Specific steps are shown in FIG. 5.

(a) Video stream obtaining: To detect whether there is the action of the user hand approaching the in-vehicle display screen, a multi-frame image is required for determining. Therefore, user cockpit video stream data captured by the camera is used for subsequent behavior detection and analysis.

(b) Behavior identification model: This model is used to analyze and determine whether the user has a specific behavior based on the obtained video stream data. Currently, a current mainstream method is to use some deep learning methods to analyze a video stream (the multi-frame image) that include user information, and finally obtain a specific behavior classification result. In a central processing unit, some convolution networks (such as the 3DCNN) may be run to analyze whether there is the action of the user hand approaching the central control screen.

A training process of the 3DCNN-based behavior identification network is as follows:

Training: It is assumed that there is a video stream $\{F_0F_1...F_n\}$, and $F_i$ is a video stream frame obtained by the camera, where $i \in [1, n]$. During analysis data selection, consecutive video stream frames may be selected. To prevent the obtained video stream frames from being excessively similar, it may be set that one frame is taken at a predetermined time interval $f_{interval}$ or that one frame is taken at an interval of a predetermined quantity of frames j, t frames are taken accumulatively, j and t are positive integers, and a t-frame image $x = \{F_0, F_{1*finterval}...F_{t*finterval}\}$ or $x = \{F_0,F_j,F_{2j},F_{3j},...,F_{tj}\}$ is used as an input of one training sample. A label y of the t-frame image x is {0,1} or {1,0}, which respectively represents an action of not approaching the central control screen or an action of approaching the central control screen. Alternatively, there may be another label setting manner. This is merely an example herein. A plurality of video segments are used to obtain an entire training sample set $X = \{x_0x_1\cdots x_m\}$, where m represents a quantity of samples in the sample set. A corresponding training label is $Y = \{y_0y_1...y_m\}$. The training sample set is used as an input and the training label is used as a known output result, to train a 3DCNN model, so that the behavior identification model is obtained.

Behavior identification process: One frame of one segment of video stream is obtained at a predetermined time interval $f_{interval}$ or at an interval of a predetermined quantity of frames j, and t frames are obtained accumulatively. The foregoing manner depends on a manner of obtaining a sample during training, and is generally the same as the manner of obtaining the sample. For example, the sample is obtained by obtaining a t-frame image at an equal interval. Therefore, in the behavior identification process, the t-frame image is also obtained at an equal interval for a video stream that needs to be analyzed, and the t-frame image is used as an input of the network, to obtain predicted values {p1, p2}. If p1 > p2, it indicates that there is the action of approaching the central control screen; otherwise, it indicates that there is no action of approaching the central control screen. Alternatively, another determining rule may be used. For example, if p1 > 0.8, it indicates that there is the action of approaching the central control screen; otherwise, it indicates that there is no action of approaching the central control screen. This is not limited herein.

• 2DCNN-based behavior identification network

As shown in FIG. 6, in addition to the 3DCNN, in the present invention, a 2DCNN may be further used to perform feature extraction and determining, to obtain a probability that the hand approaches the central control screen. Probability values of consecutive frames are finally collected according to a rule algorithm, to obtain a final result of whether the hand approaches the central control screen.

Training: It is assumed that there is a video stream $\{F_0F_1...F_n\}$ $F_i$ is a video stream frame obtained by the camera, where $i \in [1, n]$ and there is a label $\{y_0y_1...y_n\}$ corresponding to the video stream. This batch of data is used to train the behavior identification network. An input of the network is the video stream frame $F_i$. After identifying by the behavior identification network, a probability that the hand is in front of the central control screen is obtained.

Behavior identification process: One segment of video stream $\{F_0F_1 ... F_n\}$ is input, to obtain the probability $\{p_0p_1...p_n\}$ that the hand is in front of the central control screen. A size of a time window is selected as t frames, and a probability of a t-frame image is collected. If the probability is in ascending trend and a maximum probability value is greater than a threshold threshold, it is considered that there is the action of approaching the central control screen; otherwise, it is considered that there is no action of approaching the central control screen.

For example, the sensing apparatus is a depth camera or a radar, and the user behavior data is a distance from the user to the sensing apparatus. When information about the distance from the user to the sensing apparatus is identified by using the depth camera and/or the radar, the information about the distance from the user hand to the sensing apparatus may be obtained based on analysis of a depth image, and then information about the distance from the user hand to the target display screen (the in-vehicle display screen) is estimated based on the information about the distance from the user hand to the sensing apparatus and in-vehicle structure information. When the estimated distance information is less than the preset value, it is considered that the user has an intention of performing a projection operation (in other words, the preset condition is that the information about the distance from the user hand to the target display screen (the in-vehicle display screen) is less than the preset value). A more specific implementation may be: When the in-vehicle depth camera and/or the radar, and the processor are in an enabled state, the in-vehicle depth camera and/or the radar continuously capture/captures depth image data of the user, and transmit the depth image data to a processor unit. After receiving the depth image data, the processor unit performs analysis and processing, to estimate the information about the distance between the user hand and the target display screen (the in-vehicle display screen).

S202: Determine, based on image information obtained by a sensing apparatus, that the first device is held.

The sensing apparatuses in S201 and S202 may be a same sensing apparatus, or may be different sensing apparatuses, for example, may respectively be cameras of different types, or cameras of a same type that are disposed in different positions, or may respectively be a radar and a camera. When image information is obtained in S201, the image information obtained in S201 may be same as or different from the image information obtained in S202. The image information in S202 may be video information that is the same as the image information in S201, or may be picture information extracted from the video or multi-frame picture information in S201, and there is no need to additionally obtain the image information, or may be new image information that is obtained by the sensing apparatus and that has a same source or a different source as the image information in S201.

There are a plurality of implementations for determining, based on the image information obtained by the sensing apparatus, that the first device is held, including a to-be-projected device holding determining manner based on a multi-object detection network and a handheld device holding determining manner based on a single-object detection network. The following describes the manners in detail.

- To-be-projected device holding determining based on the multi-object detection network

Based on a detection method of the multi-object detection network, whether the user holds the handheld device may be determined by first detecting a frame of the handheld device and a frame of the hand in the image. In the present invention, a deep learning method is used to analyze a second user behavior image, to obtain a detection result. In other words, the processor runs the object detection network (a deep learning model) to provide frame positions of the to-be-projected device and the hand. Whether the user holds the to-be-projected device is determined. After obtaining position information of the frame of the hand and the frame of the to-be-projected device by using an object detector, intersection over union (intersection over union, IOU) between the frame of the hand and the frame of the to-be-projected device is calculated.

- 

$$IOU = \frac{Area\ of\ Overlap}{Area\ of\ Union} \qquad (1)$$

When $IOU_{hand}$ handheld terminal > $T_{IOU}$, it may be considered that the user holds the to-be-projected device; otherwise, it may be considered that the user does not hold the to-be-projected device. A value of $T_{IOU}$ ranges between 0 and 1. Here, the value may be 0.5 or another value.

FIG. 7 shows an example of an identification method in this solution by using an example in which the to-be-projected device is a handheld terminal. An object detection network may simultaneously detect two objects including a hand and a handheld device such as the handheld terminal. Then, intersection over union (IOU) between the hand and the handheld terminal (or another handheld device) is calculated, and whether the IOU is greater than a specified threshold is determined. If the IOU is greater than the threshold, the handheld device is held; otherwise, the handheld device is not held.

Training: It is assumed that there is a sample image $\{F_0 F_1 ... F_n\}$ and a label $\{y_0 y_1 \cdots y_n\}$ corresponding to the simple image. A label $y_i$ herein represents a structure, and $y_i$ = $\{p_{hand},\ x_{hand},\ y_{hand},\ width_{hand},\ height_{hand},\ p_{phone},\ x_{phone},\ y_{phone},\ width_{phone},\ height_{phone}\}$. $p_{hand}$ represents a probability that an object is a hand, and $x_{hand}$, $y_{hand}$, $width_{hand}$, and $height_{hand}$ represent position information of the hand. $p_{phone}$ represents a probability that an object is a handheld terminal, and $x_{phone}$, $y_{phone}$, $width_{phone}$, and $height_{phone}$ represent position information of the handheld terminal. This batch of data is used to train the object detection network. Finally, the object detection network is obtained, and is used to output, based on an input image, whether there is the hand and the handheld device in the image, and positions of the handheld device and the user hand. Then, the IOU is calculated based on the foregoing output data, and whether the user holds the handheld device is determined.

The foregoing position information is merely an example. In addition to the width and the height, positions of top-left vertexes P1 ($x_{left}$, $y_{top}$) and bottom-right vertexes P2 ($x_{right}$, $y_{bottom}$) of the handheld device and the hand may also be obtained through training. A schematic diagram of vertex positions of the handheld device is shown in FIG. 10. Then, heights (height) and widths (width) of the handheld device and the hand are respectively obtained based on the top-left vertexes P1 ($x_{left}$, $y_{top}$) and the bottom-right vertexes P2 ($x_{right}$, $y_{bottom}$), and the IOU is calculated.

Optionally, it is considered that the handheld device is held only by determining that if there is the hand and the handheld device in the image, and further determining is performed. A specific implementation may be:

Training: It is assumed that there is a sample

image $\{F_0 F_1 ... F_n\}$ and a label $\{y_0 y_1 ... y_n\}$ corresponding to the sample image. A label $y_i$ herein represents a structure, and $y_i = \{p_{hand}, p_{phone}\}$. Same as the foregoing implementation, $p_{hand}$ represents a probability that an object is a hand, and $p_{phone}$ represents that a probability that an object is a handheld device. This batch of data is used to train the object detection network. Finally, the object detection network is obtained, and is used to output, based on the input image, whether there is the hand, and the handheld terminal or another handheld device in the image. If there is the hand, and the handheld terminal or another handheld device in the image, it is considered that the user holds the handheld device.

- Handheld terminal holding determining based on the single-object detection network

Because a hand usually holds the handheld terminal, there is no need to train a network that detects both the hand and a handheld device. In this method, the single-object detection network is trained. The network detects only the handheld device. As shown in FIG. 8, if the network detects the handheld device, it is considered that the handheld device is held; otherwise, the handheld device is not held.

It is assumed that there is a sample image $\{F_0 F_1 ... F_n\}$ and a label $\{y_0 y_1 ... y_n\}$ corresponding to the sample image. Herein, a label $y_i$ is $\{0,1\}$ or $\{1,0\}$, which respectively indicates that there is the handheld device in the image or there is no handheld device in the image. Alternatively, there may be another label setting manner. This is merely an example herein. This batch of data is used to train the object detection network. Finally, the single-object detection network (a deep learning model) is obtained and can be used to detect whether there is the handheld device in the image. If there is the handheld device in the image, with reference to a determining result in S201, it may be inferred that a status at this time is that the handheld device held by the user approaches the target display screen.

S203: Determine, based on image or video information obtained by a sensing apparatus, a display screen orientation of the first device.

The sensing apparatuses in S203 and the other two steps may be a same sensing apparatus, or may be different sensing apparatuses, for example, may respectively be cameras of different types, or cameras of a same type that are disposed in different positions, or may respectively be a radar and a camera. When image information is obtained in S201 and S202, the image information in the three steps may be same information or different information. The image information in S203 and S202 may be video information that is the same as the image information in S201, or may be picture information extracted from the video or multi-frame picture information in S201, and there is no need to additionally obtain the image information, or may be new image information that is obtained by the sensing apparatus and that has a same source or a different source as the image information in S201. Alternatively, the image information in S203 may be same as the image information in S202, or may be new image information that is obtained by the sensing apparatus and that has a same source or a different source as the image information in S202.

There may be a plurality of implementations for determining the handheld device orientation based on the view, in the vehicle, of the current user. This has been described in detail in the foregoing step S101. Details are not described herein again.

S204: Send a message to the first device to notify the first device to display the screen content on the target display screen when it is determined that there is the action of the hand approaching the target display screen, that the first device is held, and that the display screen orientation of the first device faces a preset orientation.

When it is determined that there is the action of the hand approaching the target display screen, that the first device is held, and that the display screen orientation of the first device faces the target display screen, three determining actions may be simultaneously performed, or may be performed in sequence. In specific implementation, all the three determining steps may be performed. In other words, whether there is the action of the hand approaching the target display screen is determined, whether the first device is held is determined, and whether the display screen orientation of the first device is the preset orientation is determined. Then, when all results are yes, projection is determined to be performed. Alternatively, the three steps may be triggered in sequence and successively. For example, whether there is the action of the hand approaching the target display screen is determined. If a determining result is yes, whether the first device is held is continued to be determined. If a determining result is no, whether there is the action of the hand approaching the target display screen is continued to be detected. Similarly, when it is determined that the first device is held, whether the display screen orientation of the first device is the preset orientation is further determined. If it is determined that the user does not hold the first device, the first step of detecting whether there is the action of the hand approaching the target display screen is returned to be performed. Similarly, when it is detected that the display screen orientation of the first device does not meet the preset orientation, the first step of detecting whether there is the action of the hand approaching the target display screen is returned to be performed, and when it is detected that the display screen orientation of the first device meets the preset orientation, a projection operation is triggered. The foregoing sequence of triggering the determining steps is merely an example, and may be changed. If a determining result of any step is no, the first step is returned to be performed for detection and determining from the beginning.

In another embodiment, only any two determining steps in steps S201 to S203 may be performed.

For example, it is determined, based on the video or the multi-frame image information obtained by the sensing apparatus, that there is an action of the hand approaching the target display screen. The display screen orientation of the first device is determined based on the image or video information obtained by the sensing apparatus. A message is sent to the first device to notify the first device to display the screen content on the target display screen when it is determined that there is the action of the hand approaching the target display screen and that the display screen orientation of the first device faces the target display screen.

It is determined, based on information that is obtained by the sensing apparatus and that is about a distance from a hand to the sensing apparatus, that a distance from the hand to the target display screen is less than a preset value . The display screen orientation of the first device is determined based on the image or video information obtained by the sensing apparatus. A message is sent to the first device to notify the first device to display the screen content on the target display screen when it is determined that the distance from the hand to the target display screen is less than the preset value and that the display screen orientation of the first device faces the target display screen.

The display screen orientation of the first device is determined based on the image or video information obtained by the sensing apparatus. It is determined, based on the image information obtained by the sensing apparatus, that the first device is held. A message is sent to the first device to notify the first device to display the screen content on the target display screen when it is determined that the first device is held and that the display screen orientation of the first device faces the target display screen.

Similarly, the foregoing two determining steps may be performed simultaneously or separately, and a determining sequence is not limited. Alternatively, the foregoing two determining steps may be in a successive triggering relationship.

The embodiments in FIG. 3 and FIG. 11 may further include step S203a of determining a posture of one to-be-projected device.

S203a: Determine a posture of the first device based on image information obtained by a sensing apparatus; and determine a projection display mode of the target display screen based on the posture of the first device.

S203a may be performed after S203 and before S204. In other words, after it is determined that a screen orientation of a to-be-projected device meets a preset condition, a posture of the to-be-projected device is determined, and then whether to perform a projection operation in a landscape mode or a portrait mode is determined based on the posture. Alternatively, S203a may be performed before a projection notification is sent. In other words, after it is determined that a screen orientation of a to-be-projected device meets a preset condition, a projection operation is determined to be performed. In this case, a posture of the to-be-projected device is further determined, and whether to perform the projection operation in a landscape mode or a portrait mode is determined based on the posture. Alternatively, posture determining in S203a may occur at any moment before the projection operation is performed in this solution.

If S203a does not exist, projection is performed in a default projection display mode in S204.

Similarly, in FIG. 3, S203a may also occur at any moment before the projection operation is performed in the embodiment in FIG. 3.

In S203a, similarly, the sensing apparatus may be the same as or different from the sensing apparatus in another step in which the image information needs to be obtained, and the image information may also be image information in another step in which the image information needs to be obtained, or may be independently obtained.

Determining of the posture of the to-be-projected device mainly depends on obtaining placement position information of the to-be-projected device.

• The placement posture information of the to-be-projected device may be obtained based on a historical determining step.

In other words, if the to-be-projected device holding determining based on the multi-object detection network is used in S202, the object detection network is used to output, based on an input image, whether there is a hand and a handheld device in the image, and positions $y_i = \{p_{hand}, x_{hand}, y_{hand}, width_{hand}, height_{hand}, p_{phone}, x_{phone}, y_{phone}, width_{phone}, height_{phone}\}$ of the handheld device and the user hand, to obtain a height ($height_{phone}$) and a width ($width_{phone}$) of the handheld device. The height and the width of the handheld device are compared. If the width is greater than the height, it is considered that the device is in a landscape mode, and landscape projection is performed. If the height is greater than the width, it is considered that the screen is in a portrait mode, and portrait projection is performed.

If in S202, the top-left vertex P1 ($x_{left}, y_{top}$) and the bottom-right vertex P2 ($x_{right}, y_{bottom}$) of the handheld device are obtained, the height (height) and the width (width) of the handheld terminal may be calculated by using the following formula:

$$width = x_{right} - x_{left} \quad (2)$$

$$height = y_{bottom} - y_{top} \quad (3)$$

After calculation of the formula (2) and the formula (3), the length and the width of the handheld terminal are compared. If the width is greater than the height, it is considered that the device is in a landscape mode, and landscape projection is performed.

Similarly, if the height is greater than the width, it is considered that the device is in a portrait mode, and portrait projection is performed.

- The placement posture information of the to-be-projected device may be obtained based on a dedicated posture detection network.

If obtaining of position coordinate information or length and width information of the handheld device is not involved in any historical step, for example, only determining whether the handheld device and/or the hand exist in S202, the posture of the handheld device needs to be obtained based on the posture detection network in S203a.

For example, it is assumed that there is a sample image $\{F_0 F_1 \cdots F_n\}$ and a label $\{y_0 y_1 \cdots y_n\}$ corresponding to the sample image. A label herein $y_i$ may represent a structure, and $y_i = \{p_{phone}, x_{phone}, y_{phone}, width_{phone}, height_{phone}\}$. $p_{phone}$ represents a probability that an object is a handheld terminal, and $x_{phone}, y_{phone}, width_{phone}$, and $height_{phone}$ represent position information of the handheld terminal. Alternatively, $y_i = \{p_{phone}, x_{phone}, y_{phone}, width_{phone}, height_{phone}\}$. P1 $(x_{left}, y_{top})$ represents a vertex position in the top-left corner of the handheld device, and P2 $(x_{right}, y_{bottom})$ represents a vertex position in the bottom-right corner of the handheld device. Based on this, the posture detection network is trained to obtain a posture identification network. The obtained object detection network is used to output, based on the input image, the position coordinate information or the length and width information of the handheld device. Then, the posture of the handheld device is determined based on the foregoing output data, and a projection display mode is determined.

Similarly, the posture of the handheld device in FIG. 3 may be determined based on the multi-object detection network mentioned in S202, or may be obtained based on the dedicated posture detection network.

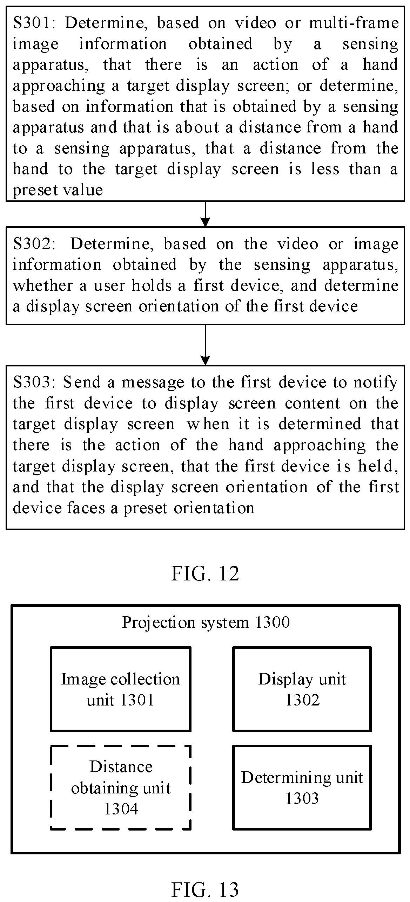

FIG. 12 is another implementation of a projection method according to the present invention. Details are as follows:

S301: Determine, based on video or multi-frame image information obtained by a sensing apparatus, that there is an action of a hand approaching a target display screen; or determine, based on information that is obtained by a sensing apparatus and that is about a distance from a hand to a sensing apparatus, that a distance from the hand to the target display screen is less than a preset value.

An implementation of step S301 is the same as that of step S201. To be specific, user behavior information is obtained by using the sensing apparatus such as an in-vehicle camera or a radar. The user behavior information may be video information or distance information, and user behavior is detected based on the obtained image information or the obtained distance information, to determine whether there is a preset action. For a specific behavior information obtaining manner and a user behavior detection determining manner, refer to related descriptions of S201. Details are not described herein again.

S302: Determine, based on image information obtained by a sensing apparatus, whether the user holds a first device and a display screen orientation of the first device.

Specifically, whether the user holds the first device and the display screen orientation of the first device are determined based on the image information obtained by the sensing apparatus and based on one neural network model.

Same as the foregoing embodiment, S301 and S302 may be performed simultaneously or separately, and may also be in a triggering relationship. For example, whether to continue to perform the subsequent determining step S302 may be determined based on a determining result in S301. If it is determined that there is an action of the hand approaching a central control screen, S302 is performed. Whether there is an action of the user holding a handheld device is further determined, and a display screen orientation of the to-be-projected device is determined. If there is no action of the hand approaching the central control screen, whether there is an action of the hand approaching the central control screen is continued to be detected.

When the image information is obtained by using a camera in S301, the image information in S302 may be information that is exactly the same or partially the same as the image information in S301, or may be different information obtained by the same camera, or may be different information obtained by different cameras.

In S302, there may be a plurality of implementations for determining, based on the image information obtained by the sensing apparatus, whether the user holds the to-be-projected device and the display screen orientation, including a to-be-projected device holding determining manner based on a multi-object detection network and a handheld device holding determining manner based on a single-object detection network. The following describes the manners in detail.

- To-be-projected device holding determining based on the multi-object detection network

Based on a detection method of the multi-object detection network, whether the user holds the handheld device may be determined by first detecting a frame of the handheld device and a frame of the hand in the image. In the present invention, a deep learning method is used to analyze a second user behavior image, to obtain a detection result. In other words, the processor runs the object detection network (a deep learning model) to provide frame positions of the to-be-projected device and the hand. Whether the user holds the to-be-projected device is determined. After obtaining position information of the frame of the hand and the frame of the to-be-projected device by using an object detector, intersection over union (intersection over union, IOU) between the frame of the hand and the frame of the to-be-projected device is calculated.

- $$IOU = \frac{Area\ of\ Overlap}{Area\ of\ Union} \qquad (1)$$

When $IOU_{hand}$ handheld terminal $> T_{IOU}$, it may be considered that the user holds the to-be-projected device; otherwise, it may be considered that the user does not hold the to-be-projected device. A value of $T_{IOU}$ ranges between 0 and 1. Herein, the value may be 0.5 or another value.

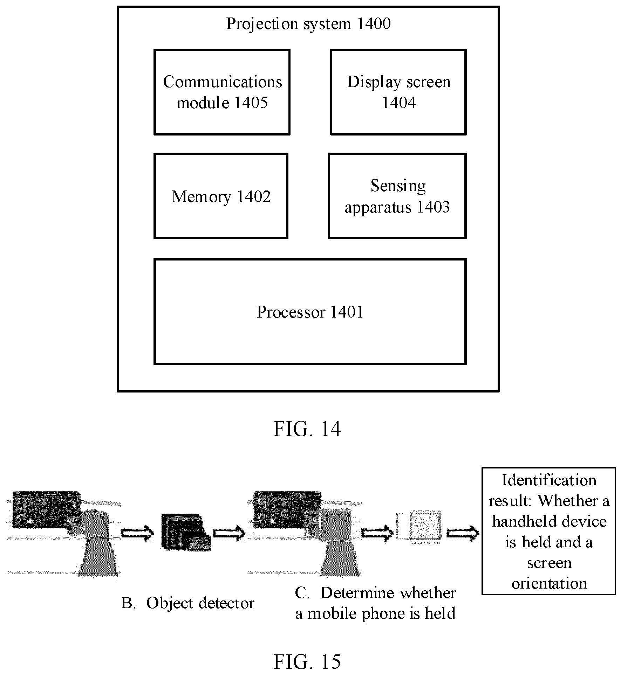

FIG. 15 shows an example of an identification method for determining whether a handheld device is held in this solution by using an example in which the to-be-projected device is a handheld terminal. An object detection network may simultaneously detect two objects including a hand and the handheld device such as the handheld terminal, and an orientation of the handheld terminal. Then, intersection over union (IOU) between the hand and the handheld terminal (or another handheld device) is calculated, and whether the IOU is greater than a specified threshold is determined. If the IOU is greater than the threshold, the handheld device is held; otherwise, the handheld device is not held.

Training: It is assumed that there is a sample image $\{F_0 F_1 \cdots F_n\}$ and a label $\{y_0 y_1 ... y_n\}$ corresponding to the simple image. A label herein $y_i$ represents a structure, and $y_i = \{p_{hand}, x_{hand}, y_{hand}, width_{hand}, height_{hand}, p_{phone}, x_{phone}, y_{phone}, width_{phone}, height_{phone}, p\}$. $p_{hand}$ represents a probability that an object is a hand, and $x_{hand}, y_{hand}, width_{hand}$, and $height_{hand}$ represent position information of the hand. Similarly, $p_{phone}$ represents a probability that an object is a handheld terminal, and $x_{phone}, y_{phone}, width_{phone}$, and $height_{phone}$ represent position information of the handheld terminal. p represent a possibility of facing the target display screen. This batch of data is used to train the object detection network. Finally, the object detection network is obtained, and is used to output, based on an input image, whether there is the hand and the handheld device in the image, positions of the handheld device and the user hand, and an orientation of the target display screen. Then, the IOU is calculated based on the foregoing output data, and whether the user holds the handheld device is determined.

The foregoing position information is merely an example. In addition to the width and the height, positions of top-left vertexes P1 ($x_{left}, y_{top}$) and bottom-right vertexes P2 ($x_{right}, y_{bottom}$) of the handheld device and the hand may also be obtained through training. A schematic diagram of vertex positions of the handheld device is shown in FIG. 10. Then, heights (height) and widths (width) of the handheld device and the hand are respectively obtained based on the top-left vertexes P1 ($x_{left}, y_{top}$) and the bottom-right vertexes P2 ($x_{right}, y_{bottom}$), and the IOU is calculated.

Optionally, it is considered that the handheld device is held only by determining that if there is the hand and the handheld device in the image, and a screen orientation is determined. A specific implementation may be:

Training: It is assumed that there is a sample image $\{F_0 F_1 \cdots F_n\}$ and a label $\{y_0 y_1 \cdots y_n\}$ corresponding to the sample image. A label $y_i$ herein represents a structure, and $y_i = \{p_{hand}, p_{phone}, p\}$. Same as the foregoing implementation, $p_{hand}$ represents a probability that an object is a hand, and $p_{phone}$ represents that a probability that an object a handheld device. p represents a possibility of facing the target display screen. This batch of data is used to train the object detection network. Finally, the object detection network is obtained, and is used to output, based on the input image, whether there is the hand and the handheld terminal in the image, and an orientation of the handheld display screen.

- Handheld terminal holding determining based on the single-object detection network

Because a hand usually holds the handheld terminal, there is no need to train a network that detects both the hand and a handheld device. In this method, the single-object detection network is trained. The network detects only the handheld device. If the network detects the handheld device, it is considered that the handheld device is held; otherwise, the handheld device is not held.

It is assumed that there is a sample image $\{F_0 F_1 ... F_n\}$ and a label $\{y_0 y_1 ... y_n\}$ corresponding to the sample image. A label $y_i$ herein is $\{p_{phone}, p\}$, where $p_{phone}$ represents a possibility that an object is a handheld device, and p represents a possibility of facing the target display screen. Alternatively, there may be another label setting manner. This is merely an example herein. This batch of data is used to train the object detection network. Finally, the single-object detection network (a deep learning model) is obtained and can be used to detect whether there is the handheld device in the image, and the screen orientation of the handheld device. If there is the handheld device in the image, with reference to a determining result in S101, it may be inferred that a status at this time is that the handheld device held by the user approaches the target display screen, and it may be inferred whether the display screen orientation of the to-be-projected device faces the target display screen.

When determining of the foregoing two conditions is involved in another embodiment in this specification, if the two conditions are not mutually triggered, the foregoing implementation of unified determining based on a comprehensive model may be used, or an implementation of separate determining based on two independent models may be used.

S303: Send a message to the first device to notify the first device to display screen content on the target display screen when it is determined that there is the action of the hand approaching the target display screen, that the first device is held, and that the display screen orientation of the first device faces a preset orientation.

Before the projection operation is performed, step S303a of determining a posture of one to-be-projected device may be further included.

S302a: Determine a posture of the first device based on image information obtained by a sensing apparatus; and determine a projection display mode of the target display screen based on the posture of the first device.

S302a may be performed after S302 and before S303. In other words, after whether the user holds the to-be-projected device and the screen orientation of the to-be-projected device are determined, the posture of the to-be-projected device is determined. Then, after it is determined that screen content of the to-be-projected device is displayed on the target display screen based on whether the user holds the to-be-projected device and based on the screen orientation of the to-be-projected device, whether to perform a projection operation in a landscape mode or a portrait mode is determined based on the posture. Alternatively, S302a may occur simultaneously with the S303. In other words, a projection operation is determined to be performed. In this case, a posture of the to-be-projected device is further determined, and then whether to perform the projection operation in a landscape mode or a portrait mode is determined based on the posture. Alternatively, posture determining in S302a may occur at any moment before the projection operation is performed in this solution.

If S302a does not exist, projection is performed in a default projection display mode in S303.

Similarly, the sensing apparatus in S302a may be the same as or different from a sensing apparatus in another step in which image information needs to be obtained, and the image information in S302a may also be image information in another step in which image information needs to be obtained, or may be independently obtained.

Determining of the posture of the to-be-projected device is the same as that in S203a, and may be obtained based on a historical determining step, or may be obtained based on a dedicated posture detection network.

In the foregoing solution, the in-vehicle sensing apparatus may be deployed at a position at which a user projection-related behavior action can be clearly observed. For example, the present invention provides several optional deployment positions of the sensing apparatus, for example, positions shown by camera icons in FIG. 4. One or more sensing apparatuses may be installed, and one or more different types of sensing apparatuses can be installed. For example, both a radar and a conventional camera may be installed. Based on information obtained by the radar, whether there is an action of the user hand approaching the target display screen is analyzed. Based on a video or an image obtained by the conventional camera, whether the user holds the handheld device, the display screen orientation of the handheld device, and whether the posture of the handheld device is horizontal or vertical are determined. A deployment principle is that user hand behavior can be detected.

A specific projection mode is not limited in the foregoing projection methods. The handheld device may be wirelessly connected to an in-vehicle infotainment system in advance. A connection manner may be Bluetooth, or Wi-Fi of a plurality of wireless connection manners. The wireless connection may be pre-established, or may be established when projection needs to be performed. When projection is determined to be performed, the handheld terminal displays a screen interface of the handheld device on a target in-vehicle display screen according to a notification sent by an in-vehicle infotainment processor. The displayed interface may be a display interface of the current handheld terminal, a menu interface, or another pre-agreed interface. A specific projection mode may be:

When determining that projection needs to be performed, the in-vehicle infotainment processor notifies the handheld device to perform a projection operation. The notification behavior may be in a plurality of message forms. After receiving a notification message, the handheld device presents a prompt interface to the user, and asks the user whether to confirm projection. After the user confirms the projection, the handheld device sends screen information to the target display screen for display.

Alternatively, an authentication relationship may be established between the handheld device and in-vehicle infotainment, and the in-vehicle infotainment is authorized to obtain the screen information of the handheld device. When determining that projection needs to be performed, the in-vehicle infotainment processor notifies the handheld device to perform a projection operation. After receiving a notification message, the handheld device sends screen information of the handheld device to the target display screen for display.

The projection operation may further include: for protection of user privacy, when the in-vehicle infotainment receives the screen information sent by the handheld device, the in-vehicle infotainment determines that authorization information of the handheld device is obtained and then displays the screen information of the handheld device on the target display screen. Obtaining the authorization information of the handheld device may be performed by querying whether there is historical authorization information of the user, or whether there is confirmation information of the user for this projection.

Neither specific connection process nor a screen content sending process of the projection are limited in the embodiments of the present invention, and may be any one of the foregoing manners, or may be another manner.

In addition, based on a requirement, in implementation of the projection method in this embodiment of the present invention, a projection intention may also be detected when the screen is in a locked state or in an enabled state. Alternatively, whether the screen is in a locked state may be first identified, and if the screen is in the locked state, a screen status continues to be monitored. When the screen status is determined to be in an enabled state, a projection intention is detected. The foregoing projection detection intention is performed at which time and under what condition is not limited in the embodiments of the present invention, and the solution may be flexibly designed based on a specific requirement in specific implementation.

FIG. 13 is a schematic structural diagram of a projection system corresponding to the projection methods corresponding to FIG. 3, FIG. 11, and FIG. 12 in this application.

As shown in FIG. 13, the projection system 1300 in the present invention may include a display unit 1302 and a determining unit 1303, and optionally, is configured with an image collection unit 1301 or a distance obtaining unit 1304, or is configured with both an image collection unit and a distance obtaining unit as required. For example, when the projection system needs to determine, based on distance information, whether a hand approaches a target display screen, the projection system needs to be equipped with the distance obtaining unit 1304. However, when the projection system determines, based on image information, whether a user has a projection intention, the projection system may not need to be equipped with the distance obtaining unit 1304.

Similarly, if the projection system only needs to determine, based on the distance information, whether the hand approaches the target display screen to trigger projection, the projection system may not need to be equipped with the image collection unit.

The image collection unit 1301 is configured to collect image information.

The distance obtaining unit 1304 is configured to obtain distance information.

The determining unit 1303 is configured to analyze and identify the image information collected by the image collection unit 1301 and/or the distance information obtained by the distance obtaining unit 1304, and determine, based on an analysis and identification result, whether to perform a projection operation.

The display unit 1302 is configured to display screen content of a to-be-projected device after the determining unit 1303 determines that the projection operation needs to be performed.

Persons skilled in the art may understand that, the projection system in this embodiment of this application may include more or fewer components than those shown in the diagram, or some components may be combined, or the components may be arranged in a different manner. The image collection unit and the distance obtaining unit each may further include a plurality of subunits, and image information in different determining conditions may be the same or different. When the image information is different, the image information may be from a same image collection subunit, or may be from different image collection subunits.

When the projection system 1300 is configured to perform the projection methods corresponding to FIG. 3, FIG. 11, and FIG. 12, the determining unit 1303 may determine, based on one or more conditions, whether to perform a subsequent projection operation. In a case in which there are a plurality of conditions, according to a specific design of the solution, the determining unit 1303 may perform detection on the plurality of determining conditions in sequence, or may perform detection on the plurality of conditions in parallel, or may perform detection, in a successively triggering manner, on the plurality of conditions.

FIG. 14 is a schematic structural diagram of a projection system corresponding to the projection methods corresponding to FIG. 3, FIG. 11, and FIG. 12 in this application.

As shown in FIG. 14, the projection system 1400 in the present invention may include one or more processors 1401, one or more memories 1402, one or more sensing apparatuses 1403, one or more display screens 1404, and a communications module 1405. The processor 1406 may be separately connected to components such as the memory 1402, the sensing apparatus 1403, the display screen 1404, and the communications module 1405 through a bus. Descriptions are respectively as follows.

The memory 1402 may include a high-speed random access memory, or may include a nonvolatile memory, for example, at least one magnetic disk storage device, a flash storage device, or another volatile solid-state storage device. Correspondingly, the memory 1402 may further include a memory controller to provide access of the processor 1401 to the memory 1402. The memory 1402 may be specifically configured to store a software program (instructions), and image information and/or distance information collected by a sensing apparatus.

The sensing apparatus 1403 is configured to collect image information and/or distance information. In a specific implementation process, the sensing apparatus 1403 may include a plurality of types of sensors, for example, sensing apparatuses, such as a camera and a radar, that are configured to photograph image information, and measure a distance. There may be one or more types of sensing apparatuses, or a plurality of sensing apparatuses of a same type may be deployed.

The display screen 1404 is configured to display screen content of a to-be-projected device after the processor 1401 determines that a projection operation needs to be performed.

The communications module 1405 is configured to perform a communication connection to the to-be-projected device by using a wireless or wired communications technology, for example, a cellular mobile communications technology, a WLAN, or Bluetooth, and transmit screen data of the to-be-projected device according to a received instruction when need.

The processor 1406 is configured to analyze and identify user behavior information, and deliver a projection instruction when the projection operation needs to be performed. In a possible embodiment, the processor 1401 may further include one or more processing cores. The processor 1401 may analyze and identify the user behavior information by executing program instructions. The processor 1401 may be a special-purpose processor or a general-purpose processor. When the processor 1401 is the general-purpose processor, the processor 1401 runs or executes the software program (instructions) and/or a module stored in the memory 1402. The processor 1401 may further use one or more integrated circuits, to execute a related program. The processor 1401 may be an integrated circuit chip and has a signal processing capability. In an implementation process, steps of user intention analysis in the projection method in this application may be completed by using a hardware integrated logic circuit or instructions in a form of software in the processor 1401.

Persons skilled in the art may understand that, the projection system in this embodiment of this application may include more or fewer components than those shown in the diagram, or some components may be combined, or the components may be arranged in a different manner. For example, the projection device may further include a loudspeaker, a microphone, and the like. Details are not described herein again.

When the projection system 1400 is configured to perform the method corresponding to FIG. 3, the following is specifically included:

The sensing apparatus 1403 is configured to obtain image information. The sensing apparatus 1403 may be one or more of an in-vehicle camera, a radar, and the like.

The processor 1401 determines, based on image or video information obtained by the sensing apparatus, a display screen orientation of a handheld device. The at least one processor displays screen content of the first device on the target display screen when the at least one processor determines that the display screen orientation of the handheld device meets a preset orientation or notifies the handheld device to display screen content on the target display screen when the at least one processor determines that the display screen orientation of the handheld device meets a preset orientation. For a specific implementation of the foregoing determining step, refer to the detailed description in FIG. 3.

When a plurality of screen display modes are required, the processor 1401 may further determine, by determining whether a posture of the handheld device is horizontal or vertical, whether a projection display mode of the screen content of the current handheld device is a landscape mode or a portrait mode. Therefore, the processor 1401 determines the posture of the handheld device at any time before the projection operation is implemented. For a manner of determining the posture of the handheld device, refer to specific implementation details in step 203a.

When the projection system 1400 is configured to perform the method corresponding to FIG. 11, the following is specifically included:

The sensing apparatus 1403 is configured to obtain image information and/or distance information based on a requirement set in a solution. The sensing apparatus 1403 may be one or more of an in-vehicle camera, a radar, and the like. Which type of sensing apparatus is used, and whether a same sensing apparatus or different sensing apparatuses are used depend on content of to-be-obtained information. For example, when angles of images that need to be obtained under different determining conditions are different or images at different positions need to be obtained, different cameras need to be used.

The processor 1401 determines, based on video or multi-frame image information obtained by the sensing apparatus, that there is an action of a hand approaching the target display screen; or determines, based on information that is obtained by the sensing apparatus and that is about a distance from a hand to the sensing apparatus, that a distance from the hand to the target display screen is less than a preset value.

The processor 1401 determines, based on the image information obtained by the sensing apparatus, that the handheld device is held.

The processor 1401 determines the display screen orientation of the handheld device based on the image or the video information obtained by the sensing apparatus.

For a specific implementation of the foregoing determining step, refer to the detailed description in FIG. 11.

The processor 1401 sends a message to the handheld device to notify the handheld device to display the screen content on the target display screen when the processor 1401 determines that there is the action of the hand approaching the target display screen, that the handheld device is held, and that the display screen orientation of the handheld device faces the preset orientation.

An in-vehicle system may have one or more processors 1401. When the processor 1401 determines that there is the action of the hand approaching the target display screen, that the handheld device is held, and that the display screen orientation of the handheld device faces the target display screen, three determining steps may be simultaneously performed, or may be performed in sequence. In specific implementation, all the three determining steps may be performed. In other words, the processor 1401 determines whether there is the action of the hand approaching the target display screen, determines whether the handheld device is held, and determines whether the display screen orientation of the handheld device is the preset orientation. Then, when all results are yes, the processor 1401 determines to perform projection. Alternatively, the processor 1401 may perform the foregoing determining steps in sequence, and the foregoing determining processes are successively triggered. For example, the processor 1401 determines whether there is the action of the hand approaching the target display screen. If a determining result is yes, the processor 1401 continues to determine whether the handheld device is held. If a determining result is no, the processor 1401 continues to detect whether there is the action of the hand approaching the target display screen. Similarly, when it is determined that the handheld device is held, the processor 1401 further determines whether the display screen orientation of the handheld device is the preset orientation. If it is determined that the user does not hold the handheld device, the first step of detecting whether there is the action of the hand approaching the target display screen is returned to be performed. Similarly, when it is detected that the display screen orientation of the handheld device does not meet the preset orientation, the first step of detecting whether there is the action of the hand approaching the target display screen is returned to be performed. When it is detected that the display screen orientation of the handheld device meets the preset orientation, the processor 1401 triggers the projection operation. A sequence of triggering the foregoing determining steps performed by the processor 1401 is merely an example. In implementation of the solution, a sequence of the foregoing determining steps may also be changed. When any determining result is no, the processor 1401 no longer performs subsequent determining, but returns to the first determining to perform detection determining again.

In another implementation, the projection system 1400 may alternatively perform only any two of the foregoing determining steps.

Similarly, when a plurality of screen display modes are required, the processor 1401 may further determine, by determining whether a posture of the handheld device is horizontal or vertical, whether a projection display mode of the screen content of the current handheld device is a landscape mode or a portrait mode. Therefore, the processor 1401 determines the posture of the handheld device at any time before the projection operation is implemented. For a manner of determining the posture of the handheld device, refer to specific implementation details in step 203a.

When the projection system 1400 is configured to perform the method corresponding to FIG. 12, the following is specifically included:

The sensing apparatus 1403 is configured to obtain image information and/or distance information based on a requirement set in a solution. The sensing apparatus 1403 may be one or more of an in-vehicle camera, a radar, and the like. Which type of sensing apparatus is used, and whether a same sensing apparatus or different sensing apparatuses are used depend on content of to-be-obtained information. For example, when angles of images that need to be obtained under different determining conditions are different or images at different positions need to be obtained, different cameras need to be used.

The processor 1401 determines, based on video or multi-frame image information obtained by the sensing apparatus, that there is an action of a hand approaching the target display screen; or determines, based on information that is obtained by the sensing apparatus and that is about a distance from a hand to the sensing apparatus, that a distance from the hand to the target display screen is less than a preset value.

The processor 1401 determines, based on the image information obtained by the sensing apparatus and based on a neural network model of comprehensive training, whether the user holds the first device and the display screen orientation of the first device.

For a specific implementation of the foregoing determining step, refer to the detailed description in FIG. 12.

When determining of the foregoing two conditions is involved in another embodiment of the projection system, if the two conditions are not mutually triggered, the processor 1401 may also perform unified determining based on a comprehensive model, or may separately perform determining based on two independent models.

Similarly, when a plurality of screen display modes are required, the processor 1401 may further determine, by determining whether a posture of the handheld device is horizontal or vertical, whether a projection display mode of the screen content of the current handheld device is a landscape mode or a portrait mode. Therefore, the processor 1401 determines the posture of the handheld device at any time before the projection operation is implemented. For a manner of determining the posture of the handheld device, refer to specific implementation details in step 203a.

In the foregoing embodiments, the condition determining step and the projection determining operation may be all or partially implemented by using software, hardware, firmware, or any combination thereof. When software is used to implement the condition determining step and the projection determining operation, the condition determining step and the projection determining operation may be implemented completely or partially in a form of a computer program product. The computer program product includes one or more computer instructions. When the computer instructions are loaded and executed on a computer, all or some of the procedures or functions are generated according to the embodiments of this application. The processor may be a general-purpose processor or a special-purpose processor. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

For example, in the solutions in the embodiments of this application, optionally, an execution body may be an ASIC, an FPGA, a CPU, a GPU, or the like, and may be implemented by using hardware or software. Optionally, the memory may be a volatile or non-volatile storage device, for example, a DDR, an SRAM, an HDD, or an SSD. The ASIC and the FPGA belong to hardware implementation. To be specific, the method in this application is implemented by using a hardware description language during hardware design. The CPU and the GPU belong to software implementation. To be specific, the method in this application is implemented in a manner of software program code during software design.

In the foregoing embodiments, the description of each embodiment has respective focuses. For a part that is not described in detail in an embodiment, refer to related descriptions in other embodiments.

**Claims**

1. A projection method, comprising:

   determining, based on image information obtained by a sensing apparatus, a display screen orientation of a first device; and displaying screen content of the first device on a target display screen when it is determined that the display screen orientation of the first device meets a preset orientation or notifying the first device to display screen content on a target display screen when it is determined that the display screen orientation of the first device meets a preset orientation.

2. The method according to claim 1, wherein the notifying the first device to display screen content on a target display screen when it is determined that the display screen orientation of the first device meets a preset orientation is specifically:
   sending a message to the first device to notify the first device to display the screen content on the target display screen when it is determined that the display screen orientation of the first device faces the target display screen.

3. The method according to claim 1, wherein the displaying screen content of the first device on a target display screen when it is determined that the display screen orientation of the first device meets a preset orientation comprises:
   displaying the screen content of the first device on the target display screen when it is determined that the display screen orientation of the first device faces the target display screen and that authorization information of the first device is obtained.

4. The method according to claim 1, wherein the projection method further comprises: determining, based on video or multi-frame image information obtained by a sensing apparatus, that there is an action of a hand approaching the target display screen; and sending a message to the first device to notify the first device to display the screen content on the target display screen when it is determined that there is the action of the hand approaching the target display screen and that the display screen orientation of the first device faces the target display screen.

5. The method according to claim 1, wherein the projection method further comprises: determining, based on information that is obtained by a sensing apparatus and that is about a distance from a hand to the sensing apparatus, that a distance from the hand to the target display screen is less than a preset value; and
   sending a message to the first device to notify the first device to display the screen content on the target display screen when it is determined that the distance from the hand to the target display screen is less than the preset value and that the display screen orientation of the first device faces the target display screen.

6. The method according to claim 1, wherein the projection method further comprises: determining, based on image information obtained by a sensing apparatus, that the first device is held; and sending a message to the first device to notify the first device to display the screen content on the target display screen when it is determined that the first device is held and that the display screen orientation of the first device faces the target display screen.

7. The method according to claim 1, wherein the projection method further comprises: determining, based on video or multi-frame image information obtained by a sensing apparatus, that there is an action of a hand approaching the target display screen; determining, based on image information obtained by a sensing apparatus, that the first device is held;

and sending a message to the first device to notify the first device to display the screen content on the target display screen when it is determined that there is the action of the hand approaching the target display screen, that the first device is held, and that the display screen orientation of the first device faces the target display screen.

8. The method according to claim 1, wherein the projection method further comprises: determining, based on information that is obtained by a sensing apparatus and that is about a distance from a hand to the sensing apparatus, that a distance from the hand to the target display screen is less than a preset value;

determining, based on image information obtained by a sensing apparatus, that the first device is held; and sending a message to the first device to notify the first device to display the screen content on the target display screen when it is determined that the distance from the hand to the target display screen is less than the preset value, that the first device is held, and that the display screen orientation of the first device faces the target display screen.

9. The method according to any one of claims 6 to 8, wherein the determining, based on the image information obtained by the sensing apparatus, that the first device is held comprises:

determining, according to intersection over union between the hand and the first device in the image information obtained by the sensing apparatus, that the first device is held.

10. The projection method according to any one of claims 1 to 9, wherein the method further comprises:

determining a posture of the first device based on image information obtained by the sensing apparatus; and
determining a projection display mode of the target display screen based on the posture of the first device.

11. The method according to any one of claims 6 to 8, wherein that it is determined that the first device is held, and that the display screen orientation of the first device faces the target display screen is specifically:

determining, based on the image information obtained by the sensing apparatus and based on a same neural network model, whether the user holds the first device and the display screen orientation of the first device.

12. A projection system, wherein the system comprises a target display screen and at least one processor, wherein the at least one processor determines, based on image information obtained by a sensing apparatus, a display screen orientation of a first device; and the at least one processor displays screen content of the first device on the target display screen when the at least one processor determines that the display screen orientation of the first device meets a preset orientation or notifies the first device to display screen content on the target display screen when the at least one processor determines that the display screen orientation of the first device meets a preset orientation.

13. The system according to claim 12, wherein that the at least one processor sends a message to the first device to notify the first device to display screen content on the target display screen when the at least one processor determines that the display screen orientation of the first device meets a preset orientation is specifically:

the at least one processor sends a message to the first device to notify the first device to display the screen content on the target display screen when the at least one processor determines that the display screen orientation of the first device faces the target display screen.

14. The system according to claim 12, wherein that the at least one processor displays screen content of the first device on the target display screen when the at least one processor determines that the display screen orientation of the first device meets a preset orientation comprises: the at least one processor displays the screen content of the first device on the target display screen when it is determined that the display screen orientation of the first device faces the target display screen and that authorization information of the first device is obtained.

15. The system according to claim 12, wherein the at least one processor further determines, based on video or multi-frame image information obtained by a sensing apparatus, that there is an action of a hand approaching the target display screen; and the at least one processor sends a message to the first device to notify the first device to display the screen content on the target display screen when the at least one processor determines that there is the action of the hand approaching the target display screen and that the display screen orientation of the first device faces the target display screen.

16. The system according to claim 12, wherein the at least one processor further determines, based on information that is obtained by a sensing apparatus and that is about a distance from a hand to the sensing apparatus, that a distance from the hand to the target display screen is less than a preset value; and the at least one processor sends a message to the first device to notify the first device to display the screen content on the target display screen when the at least one processor determines that the distance from the hand to the target display screen is less than the preset value and that the display screen orientation of the first device faces the target display screen.

17. The system according to claim 12, wherein the at least one processor further determines, based on image information obtained by a sensing apparatus, that the first device is held; and
the at least one processor sends a message to the first device to notify the first device to display the screen content on the target display screen when the at least one processor further determines that the first device is held and that the display screen orientation of the first device faces the target display screen.

18. The system according to claim 12, wherein the at least one processor further determines, based on video or multi-frame image information obtained by a sensing apparatus, that there is an action of a hand approaching the target display screen;

the at least one processor determines, based on image information obtained by a sensing apparatus, that the first device is held; and
the at least one processor sends a message to the first device to notify the first device to display the screen content on the target display screen when the at least one processor determines that there is the action of the hand approaching the target display screen, that the first device is held, and that the display screen orientation of the first device faces the target display screen.

19. The system according to claim 12, wherein the at least one processor further determines, based on information that is obtained by a sensing apparatus and that is about a distance from a hand to the sensing apparatus, that a distance from the hand to the target display screen is less than a preset value;

the at least one processor determines, based on image information obtained by a sensing apparatus, that the first device is held; and
the at least one processor sends a message to the first device to notify the first device to display the screen content on the target display screen when the at least one processor determines that the distance from the hand to the target display screen is less than the preset value, that the first device is held, and that the display screen orientation of the first device faces the target display screen.

20. The system according to any one of claims 17 to 19, wherein that the at least one processor determines, based on the image information obtained by the sensing apparatus, that the first device is held comprises:
the at least one processor determines, according to intersection over union between the hand and the first device in the image information obtained by the sensing apparatus, that the first device is held.

21. The projection system according to any one of claims 12 to 19, wherein

the at least one processor further determines a posture of the first device based on image information obtained by a sensing apparatus; and
the at least one processor determines a projection display mode of the target display screen based on the posture of the first device.

22. The system according to any one of claims 17 to 19, wherein that the at least one processor determines that the first device is held, and that the display screen orientation of the first device faces the target display screen is specifically:
the at least one processor determines, based on the image information obtained by a sensing apparatus and based on a neural network model, whether the user holds the first device and the display screen orientation of the first device.

FIG. 1

Display screen projection    Television projection    Notebook computer projection    Pad projection

FIG. 2

S101 : Determine, based on image information obtained by a sensing apparatus, a display screen orientation of a first device

S102: When it is determined that the display screen orientation of the first device meets a preset orientation, send a message to the first device, display screen content of the first device on a target display screen or notify the first device to display screen content on a target display screen.

FIG. 3

FIG. 4

A. Cockpit video stream | B. Behavior identification network | C. Behavior identification result

Behavior identification result: Where there is an action of a hand approaching a central control screen

FIG. 5

A. Cockpit video stream | B. Behavior identification network

0.01
0.20
...
0.80
0.90

Whether a hand approaches a central control screen is determined according to a rule

C. Behavior identification result

FIG. 6

B. Object detector | C. Determine whether a mobile phone is held

Object detection result: Whether a user holds the mobile phone

FIG. 7

B. Object detector | C. Determine whether a mobile phone is held

Object detection result: Whether a user holds the mobile phone

FIG. 8

Handheld terminal orientation classification network

Front
Back

Convolution   Pooling Convolution Pooling Fully-connected

FIG. 9

$(x_{left}, y_{top})$

$P_1$

$P_2$
$(x_{right}, y_{bottom})$

$(x_{left}, y_{top})$

$P_1$

$P_2$
$(x_{right}, y_{bottom})$

FIG. 10

S201: Determine, based on video or multi-frame image information obtained by a sensing apparatus, that there is an action of a hand approaching a target display screen; or determine, based on information that is obtained by a sensing apparatus and that is about a distance from a hand to a sensing apparatus, that a distance from the hand to the target display screen is less than a preset value

S202: Determine, based on the image information obtained by the sensing apparatus, that a first device is held

S203: Determine, based on the image or video information obtained by the sensing apparatus, a display screen orientation of the first device

S204: Send a message to the first device to notify the first device to display screen content on the target display screen when it is determined that there is the action of the hand approaching the target display screen, that the first device is held, and that the display screen orientation of the first device faces a preset orientation

FIG. 11

S301: Determine, based on video or multi-frame image information obtained by a sensing apparatus, that there is an action of a hand approaching a target display screen; or determine, based on information that is obtained by a sensing apparatus and that is about a distance from a hand to a sensing apparatus, that a distance from the hand to the target display screen is less than a preset value

S302: Determine, based on the video or image information obtained by the sensing apparatus, whether a user holds a first device, and determine a display screen orientation of the first device

S303: Send a message to the first device to notify the first device to display screen content on the target display screen when it is determined that there is the action of the hand approaching the target display screen, that the first device is held, and that the display screen orientation of the first device faces a preset orientation

FIG. 12

Projection system 1300

Image collection unit 1301

Display unit 1302

Distance obtaining unit 1304

Determining unit 1303

FIG. 13

Projection system 1400

| Communications module 1405 | Display screen 1404 |
|---|---|
| Memory 1402 | Sensing apparatus 1403 |

Processor 1401

FIG. 14

B. Object detector    C. Determine whether a mobile phone is held

Identification result: Whether a handheld device is held and a screen orientation

FIG. 15

## INTERNATIONAL SEARCH REPORT

| International application No. |
| --- |
| **PCT/CN2020/104918** |

**A. CLASSIFICATION OF SUBJECT MATTER**

G06F 3/14(2006.01)i; H04N 21/472(2011.01)n

According to International Patent Classification (IPC) or to both national classification and IPC

**B. FIELDS SEARCHED**

Minimum documentation searched (classification system followed by classification symbols)

G06F3/-; H04N21/-

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS: 靠近, 姿势, 显示, 内容, 手部, 目标显示, 传屏, 获取, 第一设备, 投屏, 显示屏, 朝向, 图像, 传感器, anigh, posture, display, content, pud, target indication, send screen, obtaining, firstly equipment, miracast, display screen, orientation, image, transducer

**C. DOCUMENTS CONSIDERED TO BE RELEVANT**

| Category* | Citation of document, with indication, where appropriate, of the relevant passages | Relevant to claim No. |
| --- | --- | --- |
| X | CN 105792004 A (TCL GROUP CO., LTD.) 20 July 2016 (2016-07-20) description, paragraphs [0002]-[0015]; [0042]-[0047], figures 1, 2 | 1-22 |
| A | CN 108736981 A (ALIBABA GROUP HOLDING LIMITED) 02 November 2018 (2018-11-02) entire document | 1-22 |
| A | CN 106598524 A (GUANGZHOU CVT ELECTRONICS TECHNOLOGY CO., LTD.; GUANGZHOU SHIRUI ELECTRONICS CO., LTD.) 26 April 2017 (2017-04-26) entire document | 1-22 |
| A | CN 110007886 A (GUANGZHOU SHIYUAN ELECTRONIC TECHNOLOGY COMPANY LIMITED; GUANGZHOU MAXHUB INFORMATION TECHNOLOGY CO., LTD.) 12 July 2019 (2019-07-12) entire document | 1-22 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 October 2020** | **03 November 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

<div align="center">

**INTERNATIONAL SEARCH REPORT**
Information on patent family members

</div>

| | International application No. |
|---|---|
| | **PCT/CN2020/104918** |

| Patent document cited in search report | | | Publication date (day/month/year) | Patent family member(s) | | | Publication date (day/month/year) |
|---|---|---|---|---|---|---|---|
| CN | 105792004 | A | 20 July 2016 | CN | 105792004 | B | 04 January 2019 |
| CN | 108736981 | A | 02 November 2018 | US | 2018309753 | A1 | 25 October 2018 |
| | | | | WO | 2018194803 | A1 | 25 October 2018 |
| | | | | TW | 201840176 | A | 01 November 2018 |
| | | | | HK | 1263080 | A0 | 24 January 2020 |
| | | | | JP | 2020521155 | W | 16 July 2020 |
| CN | 106598524 | A | 26 April 2017 | CN | 106598524 | B | 04 June 2019 |
| | | | | WO | 2018107604 | A1 | 21 June 2018 |
| CN | 110007886 | A | 12 July 2019 | | None | | |

Form PCT/ISA/210 (patent family annex) (January 2015)